# EUROPEAN PATENT APPLICATION

(11) **EP 0 744 813 A2**
(43) Date of publication of application: **27.11.1996**
(21) Application number: 96201189.6
(22) Date of filing: 29.04.1996
(51) Int. Cl.: H02K 17/16

(54) **Induction motor rotor with laminated end rings and method for making the same**

(30) Priority: 26.05.1995 US 451919
(71) Applicant: GENERAL MOTORS CORPORATION, Detroit Michigan 48202 (US)
(72) Inventor: Shafer Jr.,George Gerald, Anderson, Indiana 46013 (US); Dasher, Randall Eugene, Daleville, Indiana 47334 (US); Cunningham, William Dywane, Anderson, Indiana 46016 (US)
(74) Representative: Denton, Michael John

(57) **Abstract**

An induction motor rotor 10 is manufactured by assembling copper end ring laminations 30, 35 on each axial end of a core assembly with slots 20, 36 aligned and copper rotor bars 40 in the slots and induction brazing the ends of the copper bars to the copper end ring laminations. The forming of the end rings by laminations greatly reduces machining and scrap; and the use of induction heating reduces exposure of the core assembly to the high heat of brazing.

## Description

### Background of the Invention

The technical field of this invention is the manufacture of induction motor rotors having copper end rings and copper bars.

Induction motor rotors are often manufactured with a plurality of straight, electrically conducting bars equally spaced from and extending parallel to the rotor axis. At each axial end, these bars are joined to an electrically conducting end ring to form a "squirrel cage" rotor. Each rotor thus includes two electrically conducting end rings. The end rings may be made from aluminum, in which case they are typically manufactured in a die casting process in which molten aluminum is injected into a die defined around a ferromagnetic core to form integral end rings and conductor bars.

Copper may have certain advantages as a material from which to make the conductor bars and end rings of a induction motor rotor. However, copper is not conducive to die casting of such rotors, due to the temperature limitations of the ferromagnetic core and the rapid cooling of copper. Thus, the usual practice in manufacturing copper bar induction motor rotors is to attach one thick, slotted end ring to each end of the ferromagnetic core and silver braze or weld the bars to the slotted copper end rings on each end of the rotor. Several methods of manufacturing the slotted copper end rings are known:
(1) wire discharge machining (WEDM) of solid copper round bars;
(2) casting of round blanks with slots shaved and trimmed to size;
(3) casting of round blanks with slots machined to size; and
(4) powder metal forming of blanks with slots shaved and trimmed or machined to size.

Each copper end ring must be sufficiently thick to carry the electrical current necessary for rotor rotation, and the precision machining required for each of these methods results in high cost.

### Summary of the Invention

The object of this invention is to manufacture a shorted turn copper induction motor rotor without the use of costly precision machining of the copper end rings. A further object of the invention is the reduction of scrap produced by such machining. These objects are realized by manufacturing the electrically conducting end rings of the rotor from laminations stamped from a sheet of electrically conducting material, such as copper. A predetermined number of stamped end ring laminations are assembled on each end of the core lamination assembly with the rotor bars inserted through aligned slots of the core and end ring laminations; and the ends of the rotor bars are joined physically and electrically to the end ring laminations. The rotor thus manufactured comprises laminated end rings at each end and performs equivalently to rotors of the prior art at significantly decreased cost, due to a great reduction in machining and scrap in the formation of the end rings.

An induction motor rotor with laminated end rings and a method for making the same in accordance with the present invention is characterised by the features specified in Claim 1.

### Brief Description of the Drawings

The present invention will now be described, by way of example, with reference to the accompanying drawings, in which:
FIG. 1 shows a step in the method of manufacturing an induction motor rotor according to the invention;
FIG. 2 shows another step in the method of manufacturing an induction motor rotor according to the invention;
FIG. 3 shows a completed induction motor rotor manufactured according to the invention;
FIG. 4 shows a perspective view of an end ring lamination in the rotor of FIG. 3;
FIG. 5 shows an enlarged axial view of a portion of the end ring lamination of FIG. 4;
FIG. 6 shows a perspective view of a core lamination in the rotor of FIG. 3; and
FIG. 7 shows an enlarged axial view of a portion of the core lamination of FIG. 6.

### Description of a Preferred Embodiment

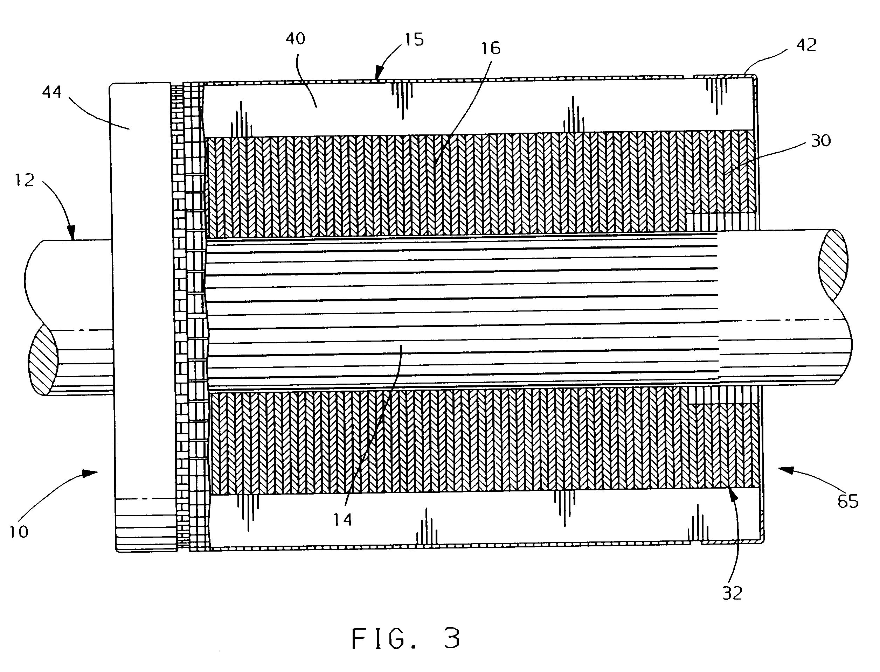

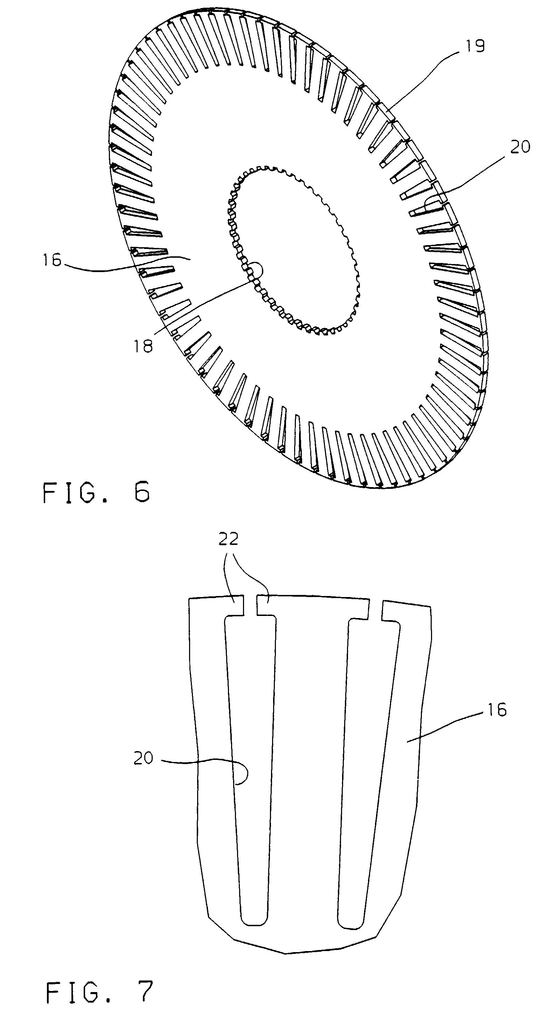

Referring to FIG. 3, an induction motor rotor 10 is built on a steel shaft 12 having an interior splined portion 14. Dimensions given in the following description are approximate dimensions of one possible embodiment and are not critical unless specifically stated. A ferromagnetic core 15 comprises a plurality of core laminations 16, which are axially stacked and spline fitted to interior splined portion 14 of shaft 12 in the normal manner. FIG. 6 shows a typical core lamination 16, which is annular in shape with spline teeth 18 at its inner diameter (43 mm)to fit corresponding splines of shaft 12 and a plurality (68, for example) of equally spaced, radially aligned slots 20 opening to outer diameter 19 (126 mm). These and all other dimensions and numbers given herein are approximate and for example only, unless otherwise stated. FIG. 7 shows a close-up of a slot 20, which is partially closed at its radially outer end by circumferential extensions 22 of the lamination material for rotor bar retention. Slot 20 measures 1.4 mm wide at its radially inner end, which is 15 mm from the outer diameter, and 2.6 mm wide adjacent extensions 22; the latter measuring 0.5 mm radially and leaving an opening of 0.8 mm.

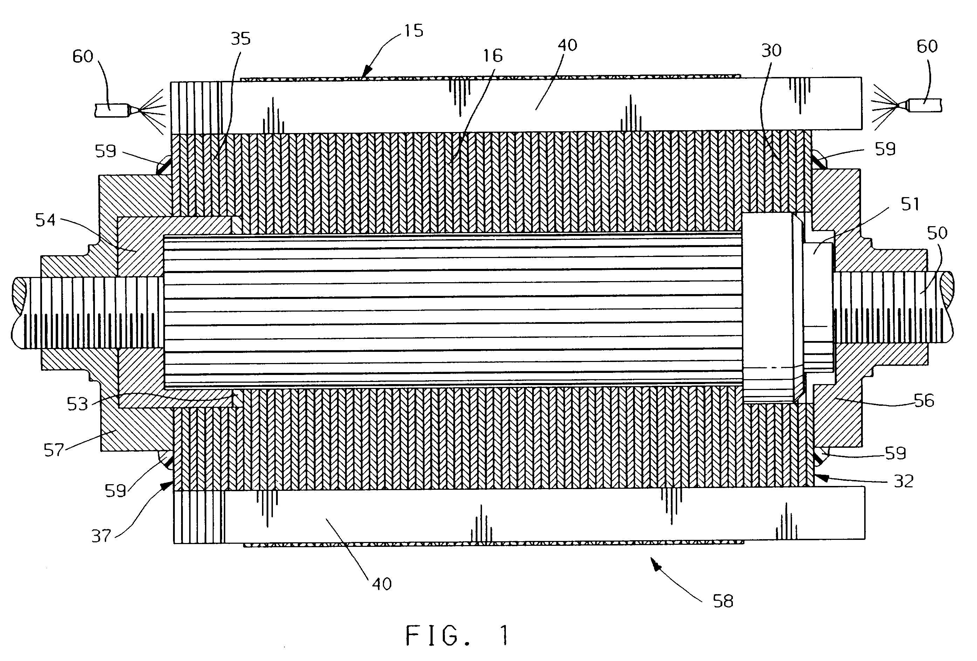

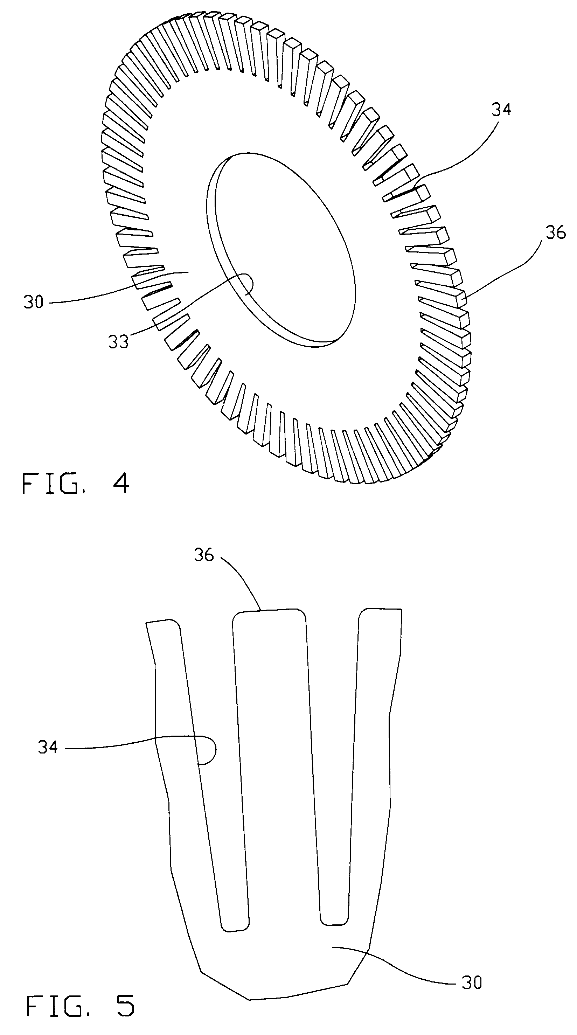

At one axial end of the core 15, a plurality of end ring laminations 30, stamped from sheet copper, are brazed together to form a slotted copper end ring 32. FIG. 4 shows an end ring lamination 30 in perspective view. End ring lamination 30 is 2.3 mm in width and annular in shape, with an unsplined inner diameter (52 mm) and a plurality of radially aligned slots 34 opening to its outer diameter 36 (125 mm). A similar end ring 37 comprising end ring laminations 35 is shown in FIG. 1 at the opposite axial end of core 15. Slots 34 of end ring lamination 30, as well as similar slots of end ring laminations 35, are equal in number, aligned with, and of essentially the shape and size as core laminations 16, but without the circumferential extensions of core lamination 16, so that they measure only 14 mm in from the 125 mm outer diameter of the lamination.

Referring again to FIG. 3, a plurality of rotor bars 40 extend axially through the slots of core 15 and end rings 32 and 37. Bars 40 are slightly trapezoidal in cross section, with a slight increase in width in the radial direction to fit the cross section of slots 20 of FIG. 7 and slots 34 of FIG. 5. Bars 40 are uniform in cross section along their axial length and are physically and electrically joined to each of end rings 32 and 37 by brazing or a similar process to form a shorted turn rotor conductor structure locked onto core 15 of rotor 10. A containment cup 42 covers the axial end of rotor 10 which comprises end ring 32; and a similar containment cup 44 covers the opposite axial end of rotor 10, which comprises end ring 37.

Essentially, the structure of rotor 10 is the same as that of the prior art except for laminations 30 of end ring 32 and laminations 35 of end ring 37. These laminations enable the end rings to be formed by the stamping of laminations from sheet copper, orienting and stacking the laminations, and joining the laminations to bars 40 by brazing or a similar process. Although a small amount of machining may be done to smooth the end rings for a precise fit of the containment cups 42 and 44, the major machining required for end rings of the prior art is eliminated for significant time and cost savings in manufacture. Additional cost savings result from the reduction in scrap produced. Moreover, with proper joining such as by copper to copper brazing, the laminated structure of the end rings does not introduce significant resistance into the rotor current paths; and tests show equivalent performance by motors having rotors made according to this invention.

In manufacture, core laminations 16 are stamped from sheet steel and stacked in the normal manner on a brazing arbor 50 with the slots and splines of all laminations aligned. Brazing arbor 50, shown in FIG. 1, includes a containment ring 51 at one end which is just large enough in diameter to retain the core laminations. Although shown as a separate part threaded onto arbor 50, containment ring 51 may be an integral part of the arbor. A washer 53 and lam containment ring 54 at the other end are also just large enough in diameter to retain the core laminations, which are tightly retained in a stack when lam containment ring 54 is threaded on arbor 50. Copper rotor bars 40 are then inserted in the slots of the stacked core so that they project from each axial end.

End ring laminations 30 and 35 are stamped from sheet copper on a punch press, and a predetermined number (e.g. 8 or 9) are assembled at each end of the core laminations by inserting axially onto the projecting ends of rotor bars 40. The end ring laminations have a larger inner diameter than the outer diameter of containment ring 51, washer 52 and lam containment ring 54, which axially retain the core laminations, so they can be pushed past these tool pieces against the core laminations. End ring containment caps 56 and 57 are then threaded onto the ends of the arbor to hold the end ring laminations tightly in place. The core and end ring laminations, which are held tightly together on brazing arbor 50 to prevent undesirable expansion during the brazing process, form a lamination assembly 58 with rotor bars 40 inserted.

Lamination assembly 58 is next placed in a rotation fixture. With all laminations aligned and held tightly together, the rotor bars 40 are then pushed axially partly out of the assembly, at least by the axial width of an end ring, so that they project outward from the other end of the assembly by an equal amount. The end ring laminations and rotor bars are now ready for fluxing, as shown in FIG. 1. A solder dam material 59 is applied around the circumference of end ring containment caps 56 and 57 where they abut the outermost end ring laminations in order to prevent flux from migrating under these caps during the brazing process. A high temperature flux is applied to the projecting rotor bars at one axial end and the exposed slots of the end ring laminations at the other axial end of rotor 10, such as by spraying from a squeeze bottle 58, while rotating rotor 10 on the fixture. Rotor bars 40 are then pushed back into lamination assembly 58 so that their ends are flush with the outermost one of end ring laminations 30 and 35 at each end; and the flux is thus distributed across the surfaces between the ends of bars 40 and end ring laminations 30 and 35. Additional flux is then applied as required to the outer surfaces of the region to be brazed, such as the edges of end ring laminations 30 and 35 and the surface where rotor bars 40 intersect end ring laminations 30 and 35.

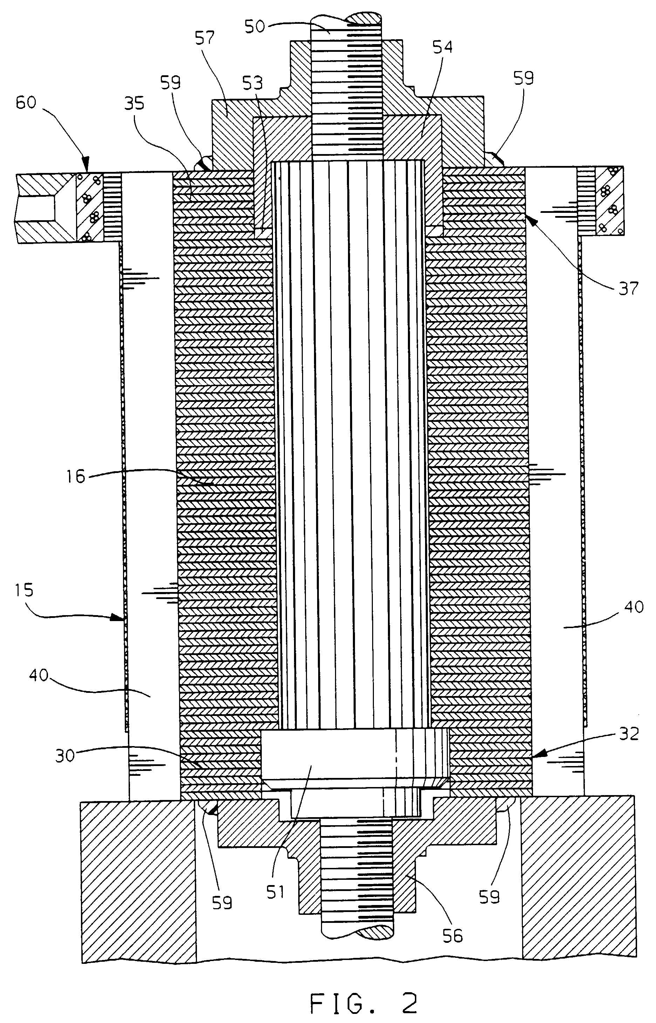

The assembly is now fluxed and ready for brazing. As seen in FIG. 2, an induction coil 60, which may, for example be the output element of an Elva Minac (R) electrical induction heating unit, is placed around and coaxial with the copper end ring laminations 30 at one axial end of the lamination stack. During brazing, the unit supplies induction coil 60 with alternating current at a high frequency of 12 KHz; and this current induces currents in the copper end ring laminations 30 and 35 and the ends of copper bars 40 within the coil. The heat produced by these induced currents raises the temperature of the region to be brazed to the brazing temperature to join the copper end ring laminations and rotor bars 40 together physically, to form a strong physical conductor structure on the rotor core, and electrically, to create low resistance current paths between bars 40 through end ring laminations 30 and 35. The unit described is capable of being programmed for two consecutive periods so that a higher power may be provided for a first period to raise the temperature to the brazing temperature and the power may be then automatically reduced to hold the brazing temperature for an additional period. During the brazing process, the lamination assembly is rotated at 5-10 RPM within induction coil 60 to distribute the heat evenly throughout the brazing region. Induction heating by coil 60 as described provides heat more efficiently to the region to be brazed with less waste heat to the remainder of the assembly than with prior art heating methods using flame or ovens. This produces time savings for reduced costs in the manufacturing process and reduces the possibility of reduced motor efficiency due to overheating of the core. When the brazing process at one end of the rotor is completed, the process is repeated at the other end.

The result of the previous processes is the transformation of lamination assembly 58 into a core and conductor subassembly 65 of an induction motor rotor. The various containment pieces are removed, and subassembly 65 is removed from the brazing arbor. It is installed in a fixture, and the rotor shaft 12 is installed. Next, some machining of the copper end rings is performed. The assembly is rotated on a lathe and copper is removed to meet the required runout of copper end rings 32 and 37 for the fit of containment cups 42 and 44. Containment cups 42 and 44 are then heated by an induction or other heating unit and installed over copper end rings 32 and 37, the cups shrinking to a tight fit as they cool. Finally, the rotor core is varnish impregnated and buffed to remove excess varnish from the surface, with the result being rotor 10 of FIG. 3.

## Claims

1. A method of making an induction machine rotor 10 comprising the steps:
assembling a plurality of core laminations 16 into a core assembly 15 having radially oriented and axially extending slots 20;
stamping a plurality of end ring laminations 30, 35 from a sheet of electrically conducting material, each of the copper end ring laminations having a plurality of radially oriented slots 36;
assembling the core assembly, the plurality of end ring laminations and a plurality of electrically conducting rotor bars 40 in a tool 50, 51, 53, 54, 56, 57 with a first number of the plurality of electrically conducting end ring laminations 30 forming a first end ring lamination stack at one axial end of the core assembly, a second number of the plurality of end ring laminations 35 forming a second end ring lamination stack at the other end of the core assembly, the slots of the first and second end ring lamination stacks being aligned with those of the core assembly to continue the same axially, and one of the plurality of electrically conducting rotor bars retained in each of the slots of the core assembly and extending through each of the first and second end ring lamination stacks;
physically and electrically joining the copper end ring lamination stacks to the ends of the rotor bars extending therethrough to form a shorted end turn conductor bar and core assembly; and
removing the shorted end turn conductor bar and core assembly from the tool and assembling it on a rotor shaft 12.

2. A shorted turn induction machine rotor comprising:
a core assembly 15 on a rotor shaft, the core assembly having a plurality of radially oriented and axially extending slots 20;
a first plurality of electrically conducting end ring laminations 30 forming a first end ring lamination stack at one axial end of the core assembly;
a second plurality of electrically conducting end ring laminations 35 forming a second end ring lamination stack at the other end of the core assembly, the electrically conducting end ring laminations 30, 35 having slots similar to those of the core assembly and aligned therewith to extend each end thereof; and
an electrically conducting rotor bar 40 retained in each of the slots of the core assembly and extending through each of the first and second end ring lamination stacks, each of the electrically conducting rotor bars being physically and electrically joined to each of the electrically conducting end ring laminations of the first and second end ring lamination stacks.

3. A method of making an induction motor rotor 10 comprising the steps:
assembling a plurality of core laminations 16 into a core assembly 15 having radially oriented and axially extending slots 20;
stamping a plurality of end ring laminations 30, 35 from a sheet of electrically conducting material, each of the copper end ring laminations having a plurality of radially oriented slots 36;
assembling the core assembly, the plurality of end ring laminations and a plurality of electrically conducting rotor bars in a tool 50, 51, 53, 54, 56, 57 with a first number of the plurality of electrically conducting end ring laminations 30 forming a first end ring lamination stack at one axial end of the core assembly, a second number of the plurality of end ring laminations 35 forming a second end ring lamination stack at the other end of the core assembly, the slots of the first and second end ring lamination stacks being aligned with those of the core assembly to continue the same axially, and one of the plurality of electrically conducting rotor bars retained in each of the slots of the core assembly and extending through each of the first and second end ring lamination stacks;
applying flux to adjacent surfaces of the copper end rings and copper bars;
placing an induction coil 60 coaxially around each of the copper end rings and providing relative axial rotation between the end rings and the induction coil while generating a high frequency alternating current within the induction coil to braze the copper bars to the copper end rings by induction heat; and
removing the conductor and core assembly from the tool and assembling it on a rotor shaft 12.
